# EUROPÄISCHE PATENTSCHRIFT

(11) **EP 2 316 668 B1**
(45) Veröffentlichungstag und Bekanntmachung des Hinweises auf die Patenterteilung: **24.12.2014**
(21) Anmeldenummer: 10188246.2
(22) Anmeldetag: 20.10.2010
(51) Int. Cl.: B60D 1/06, B60D 1/36, B60D 1/62

(54) **Anhängekupplung**
Tow bar
Attelage

(30) Priorität: 29.10.2009 DE 102009046180
(43) Veröffentlichungstag der Anmeldung: 04.05.2011
(73) Patentinhaber: SCAMBIA Industrial Developments Aktiengesellschaft, 9494 Schaan (LI)
(72) Erfinder: Wieczorek, Romeo, 73732, Esslingen (DE); Riehle, Jörg, 71679, Asperg (DE)
(74) Vertreter: Hoeger, Stellrecht & Partner Patentanwälte

(56) Entgegenhaltungen:
- EP-A2- 1 477 338
- WO-A1-2007/025136
- DE-A1- 19 810 378
- US-A- 5 159 312
- US-A1- 2006 186 636

## Beschreibung

Die Erfindung betrifft eine Anhängekupplung für Kraftfahrzeuge umfassend einen Kugelhals, eine an einem ersten Ende des Kugelhalses angreifende, am Kraftfahrzeug fixierte Halteeinheit für den Kugelhals sowie eine an einem zweiten Ende des Kugelhalses angeordnete Kupplungskugel.

Dokument EP 1 477 338 A2 zeigt eine gattungsgemäße Anhänge-Kupplung.

Bei derartigen Anhängekupplungen besteht das Problem, dass in möglichst einfacher und sicherer Art und Weise ein Kupplungsaufsatz erkannt werden soll, der an der Kupplungskugel angreift.

Ein derartiger Kupplungsaufsatz kann beispielsweise von einem Anhänger stammen oder von einem Trägersystem, welches ebenfalls an der Anhängekupplung montiert werden kann, oder von ähnlichen Systemen, die an der Anhängekupplung angreifen und über diese am Fahrzeug fixiert werden sollen.

Der Erfindung liegt daher die Aufgabe zugrunde, eine Anhängekupplung der eingangs beschriebenen Art derart zu verbessern, dass in einfacher Weise ein an der Kupplungskugel angreifender Kupplungsaufsatz erkannt werden soll.

Die Aufgabe wird bei einer Anhängekupplung der eingangs beschriebenen Art durch die Merkmale des Anspruchs 1 gelöst.

Der Vorteil der erfindungsgemäßen Lösung ist darin zu sehen, dass mit einem derart angeordneten Magnet und einem derart angeordneten Magnetfeldsensor die Möglichkeit besteht, einen Kupplungsaufsatz dadurch zu erkennen, dass dieser Kupplungsaufsatz die Magnetfelddurchflutung des Kugelhalses dadurch ändert, dass der Kupplungsaufsatz das von der Kupplungskugel ohne Kupplungsaufsatz ausgehende Magnetfeld umlenkt und damit die Magnetfelddurchflutung des Kugelhalses verändert.

Damit ist in einfacher Weise die Möglichkeit geschaffen, einen derartigen Kupplungsaufsatz zu erkennen.

Ferner besteht der Vorteil der erfindungsgemäßen Lösung darin, dass durch die Messung der Magnetfelddurchflutung des Kugelhalses mittels des Magnetfeldsensors die Möglichkeit besteht, den Magnetfeldsensor außerhalb der für die Stabilität der Anhängekupplung kritischen Bereiche der Anhängekupplung an einer geeigneten Stelle am Kugelhals, anzuordnen, wobei insbesondere das Anordnen des Magnetfefdsensors an dem Kugelhals dessen Stabilität unwesentlich oder nicht beeinträchtigt.

Insbesondere besteht die Möglichkeit auch durch geeignete Gestaltung des Kugelhalses eine Stelle zu schaffen, die durch die Anordnung des Magnetfeldsensors an dieser oder in einer an dieser vorgesehenen Ausnehmung keinerlei negativen Einfluss auf die Stabilität und Tragfähigkeit der Anhängekupplung hat.

Eine besonders günstige Lösung sieht vor, dass der Magnet in der Kupplungskugel derart angeordnet ist, dass ein an der Kupplungskugel angreifender Kupplungsaufsatz die Magnetfelddurchflutung des Kugelhalses, bezogen auf eine Magnetfelddurchflutung des Kugelhalses bei von dem Kupplungsaufsatz freier Kupplungskugel, reduziert.

Das heißt, dass in diesem Fall der Magnet so angeordnet ist, dass der Kupplungsaufsatz dann, wenn er die Kupplungskugel übergreift, die Magnetfelddurchflutung des Kugelhalses reduziert und die Möglichkeit schafft, das Angreifen des Kupplungsaufsatzes an der Kupplungskugel somit durch die Messung des Magnetfeldes mittels des Magnetfeldsensors zu erfassen. Beispielsweise besteht dabei die Möglichkeit, die Auswerteschaltung derart auszubilden, dass diese bei Unterschreiten eines Schwellwertes der Magnetfelddurchflutung davon ausgeht, dass der Kupplungsaufsatz an der Kupplungskugel angreift und bei Überschreiten des Schwellwertes oder eines weiteren Schwellwertes davon ausgeht, dass kein Kupplungsaufsatz mehr an der Kupplungskugel angreift.

Insbesondere führt der Kupplungsaufsatz auf der Kupplungskugel zu einer Umleitung des Magnetfeldes dahingehend, dass das Magnetfeld auf einen Bereich um die Kupplungskugel konzentriert wird und maximal noch ein unmittelbar an die Kupplungskugel angrenzender Bereich des Kugelhalses magnetfelddurchflutet ist.

Eine vorteilhafte Lösung sieht dabei vor, dass der Magnet in einem dem zweiten Ende des Kugelhalses abgewandten Bereich der Kupplungskugel angeordnet ist.

Eine derartige Anordnung des Magneten in diesem, dem zweiten Ende des Kugelhalses abgewandten Bereich der Kupplungskugel hat den Vorteil, dass dadurch das von diesem Magnet erzeugte Feld durch den Kupplungsaufsatz sehr stark und somit einfach messbar verändert wird, so dass damit ein Erkennen des Kupplungsaufsatzes erleichtert wird, da sich das Magnetfeld mit Aufsetzen des Kupplungsaufsatzes auf der Kupplungskugel gegenüber dem einer von einem Kupplungsaufsatz freien Kupplungskugel, sehr signifikant ändert.

Die erfindungsgemäße Lösung sieht vor, dass der Magnet in einer Ausnehmung der Kupplungskugel angeordnet ist, um einerseits den Magnet gegen mechanische Einwirkungen zu schützen und andererseits das sich aufbauende Magnetfeld und somit die Magnetfelddurchflutung des Kugelhalses optimal zu gestalten.

Eine mechanisch sehr vorteilhafte Lösung sieht vor, dass sich die Ausnehmung von einer dem zweiten Ende abgewandten Öffnung in die Kupplungskugel hineinerstreckt.

Bei dieser Lösung lässt sich insbesondere in einfacher Weise der Magnet einsetzen und in der Kupplungskugel fixieren, beispielsweise durch Vergießen.

Besonders günstig ist es dabei, wenn die Ausnehmung in einem von einer Symmetrieachse der Kupplungskugel durchsetzten Zentralbereich liegt, da der Zentralbereich der Kupplungskugel mechanisch geringfügig belastet ist und sich damit das Vorsehen der Ausnehmung nicht signifikant auf die Stabilität der Kupplungskugel auswirkt.

Eine besonders günstige Lösung sieht ferner vor, dass der Magnet mit seiner Nord-Süd-Ausrichtung parallel oder in einem spitzen Winkel, vorzugsweise in einem spitzen Winkel von weniger als 30°, noch besser weniger als 20°, zur Symmetrieachse der Kupplungskugel ausgerichtet ist.

Eine derartige Anordnung hat zur Folge, dass das sich ausbildende Magnetfeld zu einer optimalen Magnetfelddurchflutung des Kugelhalses führt, die dann durch den Magnetfeldsensor der erfindungsgemäßen Lösung auch optimal detektiert werden kann.

Besonders vorteilhaft ist es, wenn die Ausnehmung symmetrisch zur Symmetrieachse der Kupplungskugel angeordnet ist.

Die Kupplungskugel ist vorzugsweise so ausgebildet und so am Kugelhals angeordnet, dass die Symmetrieachse in der Arbeitsstellung des Kugelhalses eine im Wesentlichen vertikal verlaufende Mittelachse der Kupplungskugel ist.

Ferner wurden hinsichtlich der Anordnung des Magneten in der Kupplungskugel und zwar der Ankopplung an das Material der Kupplungskugel, keine näheren Angaben gemacht.

Eine besonders vorteilhafte Lösung sieht dabei vor, dass der Magnet im Bereich einer seiner Polseiten mit einem Luftspalt zum Material der Kupplungskugel angeordnet ist, um eine optimale Ausbildung des durch diesen Magneten erzeugen Magnetfeldes zu erreichen.

Insbesondere ist dabei die einem Boden der Ausnehmung zugewandte Polseite mit einem Luftspalt relativ zu dem Boden der Ausnehmung angeordnet, während eine gegenüberliegende Polseite insbesondere einer Öffnung der Ausnehmung zugewandt ist, so dass ausgehend von dieser Polseite verlaufende Magnetfeldlinien durch die Öffnung der Ausnehmung aus der Kupplungskugel austreten können.

Hinsichtlich der konkreten Ausbildung des Magneten sind im Zusammenhang mit der bisherigen Lösung keine näheren Angaben gemacht.

Prinzipiell könnte der Magnet beliebig ausgebildet sein.

Günstige Einbausituationen ergeben sich insbesondere dann, wenn der Magnet als Knopfmagnet ausgebildet ist, das heißt, dass die Polseiten des Magneten die Flachseiten des Magneten mit der größten Flächenausdehnung sind.

Alternativ dazu sieht eine weitere vorteilhafte Lösung vor, dass der Magnet als Stabmagnet ausgebildet ist, wobei Endseiten des Stabes die Polseiten darstellen.

Ein derartiger Stabmagnet hat den Vorteil, dass eine für diesen vorzusehende Ausnehmung einen geringeren Durchmesser haben kann als bei einem Knopfmagnet, der Stabmagnet es allerdings erforderlich macht, dass die Ausnehmung sich tiefer in das Material der Kupplungskugel hineinerstreckt als dies bei einem Knopfmagnet der Fall ist.

Hinsichtlich der Anordnung des Magnetfeldsensors am Kugelhals wurden bislang keine näheren Angaben gemacht.

Prinzipiell könnte der Sensor an jeder Stelle des Kugelhalses, die magnetfelddurchflutet ist, angeordnet sein.

Eine besonders günstige Lösung sieht vor, dass der Kugelhals ausgehend von der Kupplungskugel in einer Krümmungsebene gekrümmt verläuft und dass der Magnetfeldsensor in einem Krümmungsinnenbereich des Kugelhalses angeordnet ist.

Ein derartiger Krümmungsinnenbereich ist bei einer derartigen Ausbildung des Kugelhalses in der Regel stärker magnetfelddurchflutet als der Krümmungsaußenbereich, so dass dadurch die Änderung des Magnetfeldes besonders günstig zu detektieren ist.

Dabei liegt vorzugsweise die Mittelachse der Kupplungskugel in der Krümmungsebene, wobei auch die Krümmungsebene eine Ebene ist, welche den Kugelhals schneidet.

Um eine möglichst große Änderung des Magnetfeldes zu erhalten, ist vorzugsweise vorgesehen, dass der Sensor in einem Abschnitt des Kugelhalses angeordnet ist, welcher in Richtung des Verlaufs des Kugelhalses mindestens einen Abstand von dem zweiten Ende aufweist, der größer als ein Durchmesser der Kupplungskugel ist.

Erfindungsgemäß weist der Kugelhals einen sich von dem zweiten Ende ausgehend erstreckenden Kugelhalsendabschnitt auf und der Magnetfeldsensor ist außerhalb des Kugelhalsendabschnitts angeordnet .

Der Kugelhalsendabschnitt ist erfindungsgemäß definiert als ein sich unmittelbar an die Kupplungskugel anschließender zylindrisch geformter Abschnitt des Kugelhalses, der insbesondere nach demselben Verfahren formgebend bearbeitet ist wie die Kupplungskugel selbst.

Bei dieser Lösung ist der Sensor in ausreichend großem Abstand von der Kupplungskugel angeordnet und somit die Änderung des Magnetfeldes beim Aufsetzen des Kupplungsaufsatzes vorteilhaft zu erfassen.

Eine besonders günstige Ausführungsform sieht vor, dass der Kugelhals einen zwischen dem Kugelhalsendabschnitt und der Halteeinheit verlaufenden Zwischenabschnitt aufweist und dass der Magnetfeldsensor in dem Zwischenabschnitt angeordnet ist, so dass einerseits der Sensor in einem für eine möglichst unwesentliche Beeinträchtigung Statik des Kugelhalses günstigen Abschnitt liegt und andererseits die Änderungen des Magnetfeldes einfach und vorteilhaft erfassbar sind.

Dabei ist beispielsweise vorgesehen, dass der Zwischenabschnitt einen sich an den Kugelhalsendabschnitt anschließenden gekrümmten Bogenabschnitt aufweist und dass der Magnetfeldsensor in dem Bogenabschnitt angeordnet ist.

Ergänzend oder alternativ dazu sieht eine vorteilhafte Lösung sieht vor, dass der Zwischenabschnitt einen quer zur Mittelachse der Kupplungskugel verlaufenden Verbindungsabschnitt aufweist und dass der Magnetfeldsensor in dem Verbindungsabschnitt angeordnet ist.

Die Anordnung des Sensors kann grundsätzlich an beliebiger Stelle in dem hierfür vorgesehenen Abschnitt des Kugelhalses erfolgen.

Eine besonders vorteilhafte Lösung sieht vor, dass in dem Kugelhals eine Aufnahme für ein elektrisches Anschlusselement vorgesehen ist und dass der Magnetfeldsensor im Bereich der Aufnahme angeordnet ist. Diese Lösung hat den großen Vorteil, dass damit die Möglichkeit besteht, den Anschluss des Magnetfeldsensors über den zu dem Anschlusselement geführten Kabelstrang auszuführen.

Besonders günstig ist es dabei, wenn die Aufnahme einen Durchbruch durch den Kugelhals aufweist, in welchen das elektrische Anschlusselement einsetzbar ist.

Beispielsweise ist dabei die Aufnahme als in den Kugelhals eingeformtes Auge ausgebildet.

Vorzugsweise ist dabei vorgesehen, dass der Magnetfeldsensor in einem Innenbereich eines die Aufnahme umschließenden Ringbereichs angeordnet ist.

Alternativ dazu ist es aber auch denkbar, dass der Magnetfeldsensor in einem Außenbereich eines die Aufnahme umschließenden Ringbereichs angeordnet ist.

Die Montage des Magnetfeldsensors könnte prinzipiell auf dem Kugelhals erfolgen. Noch vorteilhafter ist es jedoch zur Magnetfeldmessung, wenn der Magnetfeldsensor in einer in den Kugelhals eingearbeiteten Tasche angeordnet ist.

Hinsichtlich der Ausbildung der Halteeinheit wurden bislang keine weiteren Merkmale beschrieben. So sieht eine Lösung vor, dass die Halteeinheit als lösbare Aufnahme für den Kugelhals ausgebildet ist.

Eine andere Lösung sieht vor, dass die Halteeinheit als Schwenklager für den Kugelhals ausgebildet ist.

Hinsichtlich der Funktion der Auswerteschaltung wurden im Zusammenhang mit der bisherigen Erläuterung der einzelnen Ausführungsbeispiele keine näheren Angaben gemacht.

So ist beispielsweise vorgesehen, dass die Auswerteschaltung ein Signal erzeugt, welches das Angreifen oder Nichtangreifen eines Kupplungsaufsatzes an der Kupplungskugel angibt.

So könnte beispielsweise die Auswerteschaltung so arbeiten, dass sie Absolutwerte der Magnetfelddurchflutung des Kugelhalses misst und bei Über- oder Unterschreiten bestimmter Absolutwerte der Magnetfelddurchflutung oder der magnetischen Flussdichte ein Signal erzeugt, das anzeigt, ob der Kupplungsaufsatz an der Kupplungskugel angreift oder nicht.

Alternativ oder ergänzend dazu ist es von Vorteil, wenn die Auswerteschaltung die gemessene Magnetfelddurchflutung oder magnetische Flussdichte in Relation setzt zu einer magnetischen Durchflutung oder magnetischen Flussdichte, die bei nicht an der Kupplungskugel angreifendem Kupplungsaufsatz erfasst wurde. Diese Magnetfelddurchflutung oder magnetische Flussdichte kann beispielsweise in einem sogenannten Eichprozess ermittelt werden, der von einem Fahrer des Kraftfahrzeugs dann gestartet wird, wenn dieser sicher ist, dass an der Anhängekupplung kein Kupplungsaufsatz oder auch sonstiges, ein Magnetfeld beeinflussendes Element angreift.

Während dieses Eichvorgangs nimmt die Auswerteschaltung den Wert für die Magnetfelddurchflutung oder magnetische Flussdichte auf und speichert diesen ab. Somit ist die Auswerteschaltung dann in der Lage, später erfasste Messwerte der Magnetfelddurchflutung oder magnetischen Flussdichte in Relation zu setzen zu dem Wert der Magnetfelddurchflutung oder magnetischen Flussdichte, welcher bei dem Eichvorgang erfasst wurde.

Beispielsweise wäre es denkbar, von dem Wert der Magnetfelddurchflutung oder magnetischen Flussdichte in einem unbekannten Zustand den im Eichvorgang ermittelten gespeicherten Wert abzuziehen und die Differenz zu analysieren.

Alternativ hierzu sieht eine andere Lösung vor, den in einem unbekannten Zustand ermittelten Wert der Magnetfelddurchflutung oder magnetischen Flussdichte durch den gespeicherten, beim Eichvorgang ermittelten Wert der Magnetfelddurchflutung oder magnetischen Flussdichte zu dividieren und somit eine Größe zu erhalten, die eine prozentuale Abweichung von dem Wert der Magnetfelddurchflutung oder dem Wert der magnetischen Flussdichte ohne den an der Kupplungskugel angreifenden Kupplungsaufsatz angibt. Diese prozentuale Abweichung kann dann noch mit Schwellwerten verglichen werden, um ein Signal zu erhalten das anzeigt, ob an der Kupplungskugel ein Kupplungsaufsatz angreift oder nicht.

Im einfachsten Fall ist ein Schwellwert für die prozentuale Abweichung ausreichend, wobei bei einem Überschreiten dieses Schwellwerts der eine und beim Unterschreiten dieses Schwellwerts der andere Zustand angezeigt wird.

Es ist aber auch denkbar, Schwellwertfenster zu definieren, innerhalb von welchen die prozentuale Abweichung von der Magnetfelddurchflutung oder magnetischen Flussdichte bei nicht an der Kupplungskugel angreifendem Kupplungsaufsatz mit hoher Sicherheit einen an der Kupplungskugel angreifenden Kupplungsaufsatz erkennt oder mit hoher Sicherheit erkennt, dass kein Kupplungsaufsatz an der Kupplungskugel angreift und beispielsweise außerhalb dieser Schwellwertfenster liegende Bereiche als Bereiche unsicherer Anzeige zu betrachten und mit dieser Zusatzinformationen anzuzeigen.

Das Signal der Auswerteschaltung, das nun ein Angreifen oder Nichtangreifen eines Kupplungsaufsatzes an der Kupplungskugel anzeigt, kann im Kraftfahrzeug in unterschiedlichster Art und Weise eingesetzt werden.

Eine Art des Einsatzes ist die, dass aufgrund dieses Signals eine Entriegelung oder ein Bewegen des Kugelhalses von der Arbeitsstellung in die Ruhestellung blockiert wird.

Eine andere Möglichkeit ist die Verwendung dieses Signals in anderen Steuergeräten des Kraftfahrzeugs, beispielsweise die Verwendung dieses Signals in einer Lichtsteuerung, um bestimmte Beleuchtungszustände zuzulassen oder nicht zuzulassen.

Eine weitere Möglichkeit ist die Verwendung dieses Signals im Zusammenhang mit der Fahrwerksteuerung oder Stabilisierung, beispielsweise in einem elektronischen Stabilitätssystem, wobei dieses Signal für das elektronische Stabilisiersystem definiert, welche Fahrzustände bei einem an der Kupplungskugel angreifenden Kupplungsaufsatz oder bei einem nicht an der Kupplungskugel angreifendem Kupplungsaufsatz zugelassen und/oder unterbunden werden.

Beispielsweise kann vorgesehen sein, dass durch dieses Signal der Auswerteschaltung dann, wenn dieses ein Angreifen eines Kupplungsaufsatzes an der Kupplungskugel anzeigt, Fahrzustände der Fahrzeugstabilisierung ausgeschlossen werden, die zu einem Schleudern oder einem Aufschaukeln einer Schleuderbewegung eines Anhängers führen würden.

Eine andere Möglichkeit ist die, je nach Vorliegen eines Signals für einen an der Kupplungskugel angreifenden oder nicht angreifenden Kupplungsaufsatz die Stromversorgung für eine Anschlusseinheit zum Versorgen der mit dem Kupplungsaufsatz verbundenen Einheit einzuschalten oder abzuschalten.

So bestünde die Möglichkeit, die Stromversorgung der Anschlusseinheit für die elektrische Versorgung einer mit dem Kupplungsaufsatz verbundenen Einheit erst dann freizuschalten, wenn ein an der Kupplungskugel angreifender Kupplungsaufsatz detektiert wird, so dass in all den Fahrzuständen, in denen kein Kupplungsaufsatz an der Kupplungskugel angreift, eine Bestromung der Anschlusseinheit unterbunden ist und dadurch Störungen vermieden werden, die beispielsweise durch Feuchtigkeit oder andere Verschmutzungen in der Anschlusseinheit auftreten und somit Kurzschlüsse verursachen können.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:

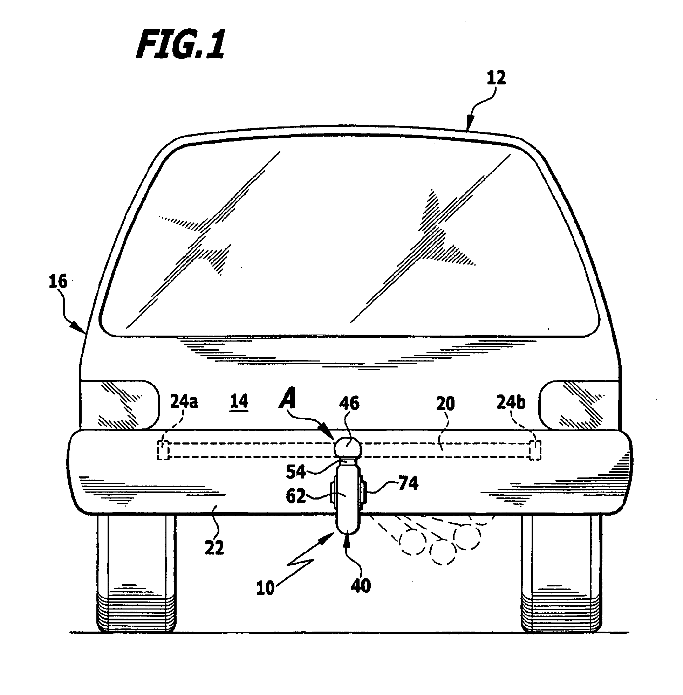

- Fig. 1: eine Rückansicht eines mit einer erfindungsgemäßen Anhängekupplung versehenen Kraftfahrzeugs;
- Fig. 2: eine vergrößerte Darstellung der Ansicht gemäß Fig. 1 mit weggelassener Stoßfängereinheit;
- Fig. 3: eine Ansicht eines ersten Ausführungsbeispiels einer erfindungsgemäßen Anhängekupplung in Richtung des Pfeils X in Fig. 2;
- Fig. 4: eine Ansicht ähnlich Fig. 3 mit Darstellung einer Magnetfelddurchflutung des Kugelhalses;
- Fig. 5: eine ausschnittsweise vergrößerte Darstellung eines Schnitts im Bereich A in Fig. 4;
- Fig. 6: eine Darstellung ähnlich Fig. 4 mit auf die Kupplungskugel aufgesetztem Kupplungsaufsatz und Darstellung der Magnetfelddurchflutung des Kugelhalses;
- Fig. 7: einen vergrößerten Schnitt durch den Bereich B in Fig. 4;
- Fig. 8: eine Darstellung des Kugelhalses gemäß Fig. 2 in Ruhestellung;
- Fig. 9: eine Darstellung ähnlich Fig. 4 eines zweiten Ausführungsbeispiels eines erfindungsgemäßen Kugelhalses;
- Fig. 10: eine vergrößerte Schnittdarstellung des Bereichs C in Fig. 9;
- Fig. 11: eine Schnittdarstellung ähnlich Fig. 7 bei einem dritten Ausführungsbeispiel einer erfindungsgemäßen Anhängekupplung;
- Fig. 12: eine Darstellung ähnlich Fig. 4 eines vierten Ausführungsbeispiels einer erfindungsgemäßen Anhängekupplung;
- Fig. 13: eine vergrößerte Schnittdarstellung des Bereichs D in Fig. 12 und
- Fig. 14: eine Darstellung ähnlich Fig. 4 eines fünften Ausführungsbeispiels einer erfindungsgemäßen Anhängekupplung.

Ein erstes Ausführungsbeispiel einer erfindungsgemäßen Anhängekupplung, als Ganzes mit 10 bezeichnet, ist an einem mit 12 bezeichneten Kraftfahrzeug montiert, und zwar an einem Heckbereich 14 einer Karosserie 16 desselben, wobei zur Verbindung zwischen der Anhängekupplung 10 und der Karosserie 16 ein Querträger 20 vorgesehen ist, der sich, abgedeckt durch eine Stoßfängereinheit 22, quer zur Fahrtrichtung erstreckt, und mit Seitenträgern 24, die sich in Fahrtrichtung erstrecken, mit der Karosserie 16 üblicherweise verbunden ist.

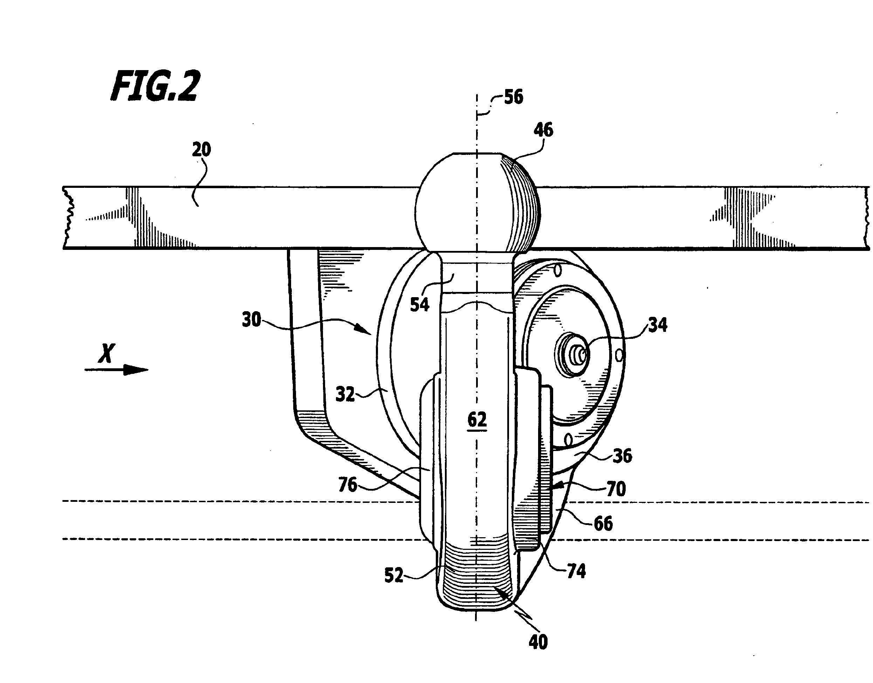

Wie in Fig. 2 dargestellt, ist an dem Querträger 20 eine als Ganzes mit 30 bezeichnete Halteeinheit vorgesehen, die im dargestellten Ausführungsbeispiel als Schwenklager ausgebildet ist und ein fahrzeugfestes Lagerelement 32 sowie ein gegenüber dem fahrzeugfesten Lagerelement 32 um eine Schwenkachse 34 verschwenkbares Lagerelement 36 umfasst.

Alternativ dazu kann die Halteeinheit 30 aber auch ein fahrzeugfestes Halteelement aufweisen, an welchem ein lösbares Halteelement fixierbar ist.

Ausgehend von dem schwenkbaren Lagerelement 36 erstreckt sich ein als Ganzes mit 40 bezeichneter Kugelhals, welcher mit einem ersten Ende 42 mit dem Lagerelement 36 verbunden ist und an einem zweiten Ende 44 eine Kupplungskugel 46 trägt.

Der Kugelhals 40 weist einen sich von dem ersten Ende ausgehend erstreckenden Zwischenabschnitt 52 auf, welcher in einen Kugelhalsendabschnitt 54 übergeht, der vorzugsweise als ähnlich der Kupplungskugel 46 bearbeiteter, zylindrischer Abschnitt unmittelbar vor dem Übergang in die Kupplungskugel 46 ausgebildet ist.

Vorzugsweise verläuft der Kugelhalsendabschnitt 54 zylindrisch zu einer Mittelachse 56 der Kupplungskugel 46, die außerdem gleichzeitig eine Symmetrieachse 56 der Kupplungskugel 46 darstellt.

Der Zwischenabschnitt 52 ist insbesondere gebildet aus einem den Kugelhalsendabschnitt 54 tragenden Bogenabschnitt 62, der von der Mittelachse 56 wegführend gebogen ist und in einen Verbindungsabschnitt 64 übergeht, welcher quer zur Mittelachse 56 verläuft und schließlich vorzugsweise noch in einen in Richtung des Lagerelementes 36 gebogenen Übergangsabschnitt 66 übergeht, welcher bis zum ersten Ende 42 des Kugelhalses 40 reicht, wobei an dem ersten Ende 42 unmittelbar das schwenkbare Lagerelement 36 angeformt ist.

Vorzugsweise bilden somit das schwenkbare Lagerelement 36, der Kugelhals 40 und die Kupplungskugel 46 ein in einer Krümmungsebene K ungefähr U-förmig ausgebildetes Teil, wobei die Krümmungsebene K durch die Symmetrieachse 56 verläuft und den Kugelhals 40 schneidet. Vorzugsweise stellt die Krümmungsebene K eine Mittelebene des Kugelhalsendabschnitts 34 und des Zwischenabschnitts 52 dar.

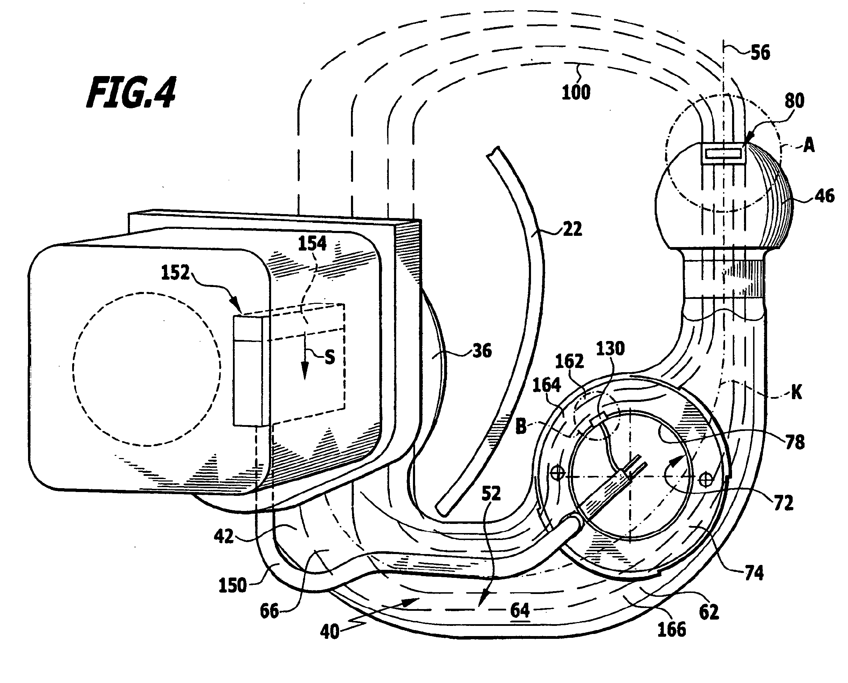

Zur Herstellung einer elektrischen Verbindung mit einem an der Kupplungskugel 46 anzuhängenden Anhänger ist vorzugsweise noch eine elektrische Anschlusseinheit 70 vorgesehen, welche, wie in Fig. 4 dargestellt, in eine Aufnahme 72 in dem Kugelhals 40 eingesetzt ist, wobei der Kugelhals 40 zur Ausbildung der Aufnahme 72 einen die Aufnahme 72 umschließenden Ringbereich 74 bildet, der in der Lage ist, im Bereich der Aufnahme 72 die Stabilität des Kugelhalses 40 sicherzustellen.

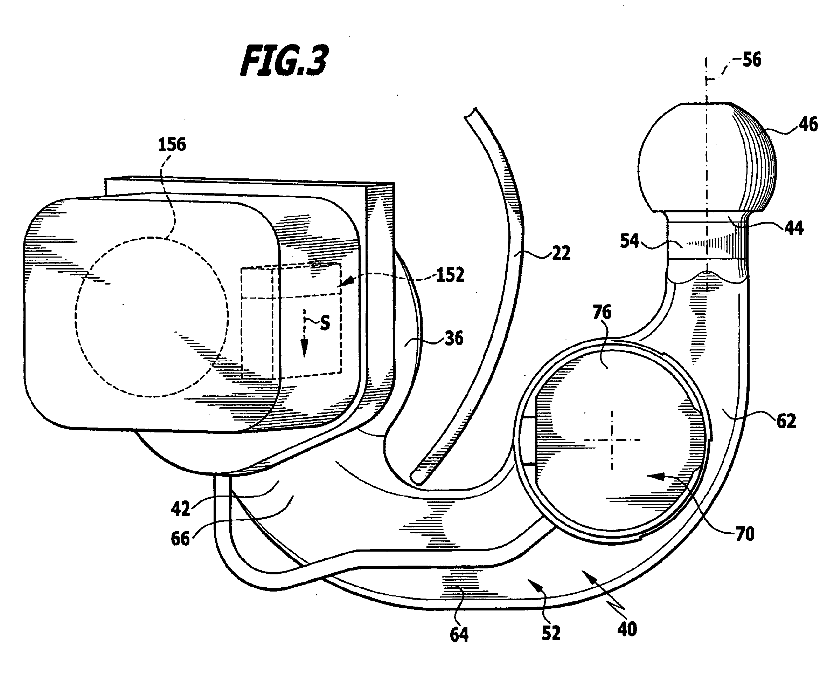

Ferner ist die elektrische Anschlusseinheit 70, wie in Fig. 3 dargestellt, beispielsweise mit einer Steckeraufnahme versehen, die durch einen Deckel 76 verschließbar ist und in der Aufnahme 72 sitzt, so dass eine Innenfläche 78 der Aufnahme 72 um die Steckeraufnahme herum verläuft.

Bei dem dargestellten ersten Ausführungsbeispiel ist der Ringbereich 74 mit der Aufnahme 72 in dem Bogenabschnitt 62 vorgesehen, so dass die elektrische Anschlusseinheit 70 in geringem Abstand von der Kupplungskugel 46 am Kugelhals 40 zugänglich ist.

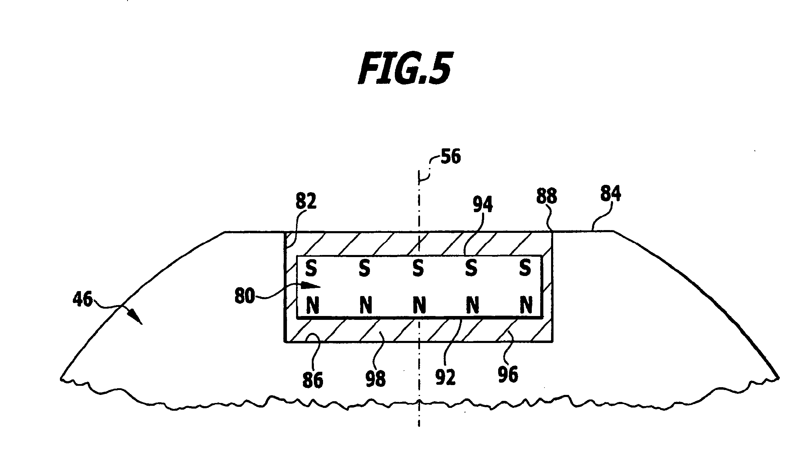

Wie in Fig. 4 dargestellt, ist in der Kupplungskugel 46 ein als Ganzes mit 80 bezeichneter Magnet vorgesehen, welcher, wie in Fig. 5 dargestellt, in einer Ausnehmung 82 sitzt, welche sich ausgehend von einer dem zweiten Ende 44 des Kugelhalses 40 gegenüberliegenden Abflachung 84 in die Kupplungskugel 46 bis zu einem Boden 86 hineinerstreckt, wobei der Abstand des Bodens 86 von der Abflachung 84 so groß ist, dass die Ausnehmung 82 den Magnet 80 vollständig aufnehmen kann, so dass der Magnet 80 in der Ausnehmung 82 gegen mechanische Angriffe von außen geschützt ist.

Beispielsweise ist der Magnet 80 in der Ausnehmung 82 so angeordnet, dass eine Polseite 92 dem Boden 86 zugewandt ist und eine Polseite 94 einer in der Abflachung 84 liegenden Öffnung 88 der Ausnehmung 82 zugewandt ist.

Insbesondere ist zwischen der Polseite 92 und dem Boden 86 ein Luftspalt 96 vorgesehen, der für die Ausbildung eines magnetischen Feldes 100 wesentlich ist, wie nachfolgend noch im Detail erörtert.

Zum Schutz des gesamten Magneten 80 ist dieser vorzugsweise in einer Einbettmasse 98 eingebettet, die sämtliche Zwischenräume zwischen dem Magneten 80 und der Ausnehmung 82 ausfüllt und bis zu der Öffnung 88 der Ausnehmung 82 reicht.

Das von dem Magnet 80 erzeugte magnetische Feld 100 durchflutet den aus ferromagnetischem Material hergestellten Kugelhals 40 dadurch, dass dieses sich ausgehend von der Polseite 92 durch die aus entsprechendem Material hergestellte Kupplungskugel 46 und den sich an diesen anschließenden Kugelhals 40 hindurch ausbreitet, dann auch beispielsweise das Lagerelement 36 durchsetzt und sich von diesem wieder in der Luft bis zu der Polseite 94 ausbreitet, sofern kein Kupplungsaufsatz, beispielsweise eines Anhängers oder eines an der Anhängekupplung angreifenden Trägers, auf der Kupplungskugel 46 aufsitzt.

Insbesondere hat das Material des Kugelhalses 40 und der Kupplungskugel 46 eine magnetische Permeabilität µ, zwischen ungefähr 50 und ungefähr 500, noch besser zwischen ungefähr 100 und ungefähr 350, vorzugsweise zwischen ungefähr 150 und ungefähr 300.

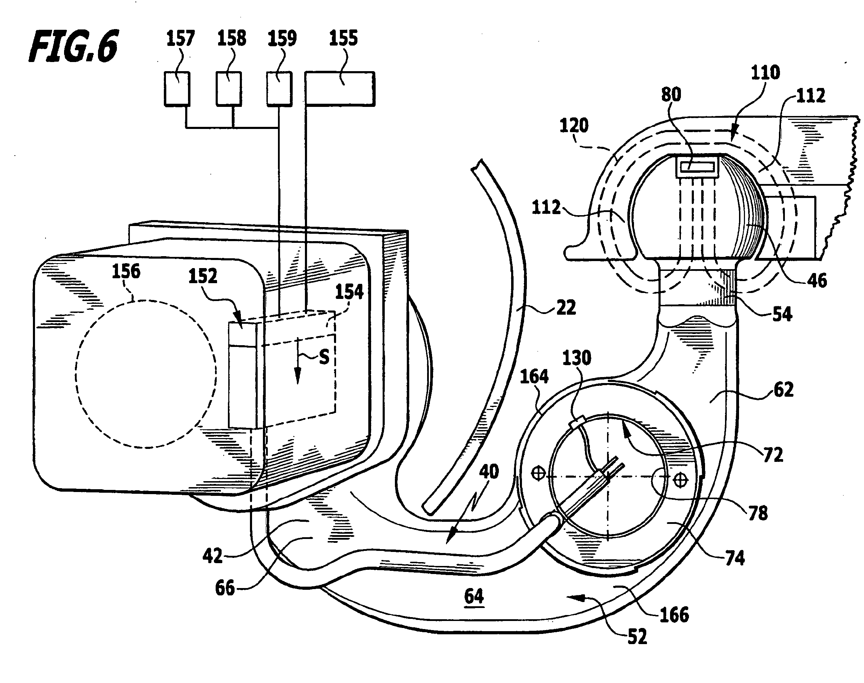

Wie in Fig. 6 dargestellt, führt das Aufsetzen eines Kupplungsaufsatzes 110 auf die Kupplungskugel 46 dazu, dass der Kupplungsaufsatz 110 das Magnetfeld des Magneten 80 umlenkt und zwar dergestalt, dass eine Magnetfelddurchflutung des Kugelhalses 40, insbesondere des Zwischenabschnitts 52 in erheblichem Maße reduziert wird, da das sich bei einem auf der Kupplungskugel 46 aufsitzenden Kupplungsaufsatz 110 ausbreitende Magnetfeld 120 von den die Kupplungskugel 46 über- und umgreifenden Elementen 112 so geführt wird, dass dieses im Wesentlichen nur den Kugelhalsendabschnitt 54 noch signifikant durchflutet, jedoch nicht mehr den Zwischenabschnitt 52 in nennenswertem Maße.

Diese Änderung der Magnetfelddurchflutung des Zwischenabschnitts 52 des Kugelhalses 40 einmal bei dem zwischen dem Magnetfeld 100 bei nicht auf der Kupplungskugel aufsitzendem Kupplungsaufsatz 110 und dem Magnetfeld 120 bei auf der Kupplungskugel 46 aufsitzendem Kupplungsaufsatz 110 ist im Zwischenabschnitt 52 des Kugelhalses 40 messbar.

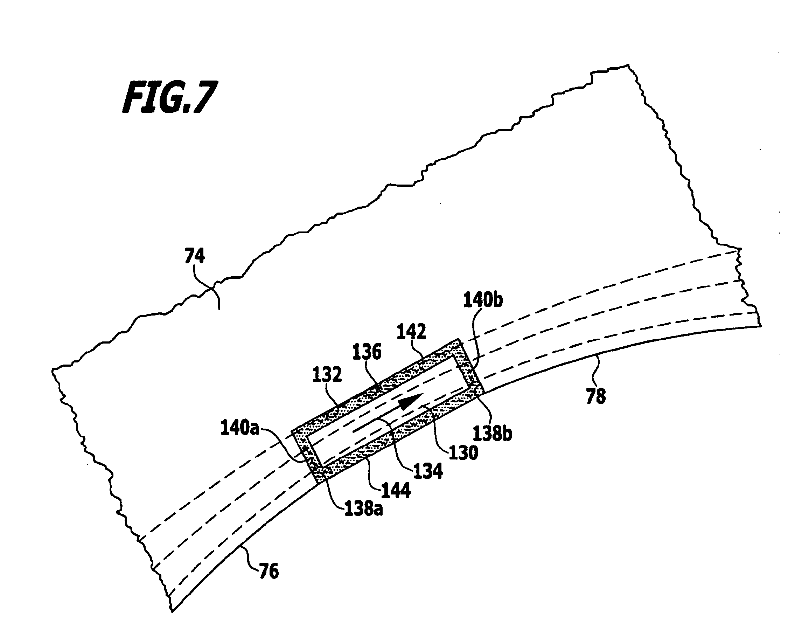

Bei dem ersten Ausführungsbeispiel, dargestellt in den Fig. 4 und 6, ist in dem Ringbereich 74, welcher die Aufnahme 72 für die elektrische Anschlusseinheit 70 umschließt, ein Magnetfeldsensor 130 vorgesehen, welcher, wie in Fig. 7 dargestellt, in einer Tasche 132 sitzt, die sich radial zur Ausnehmung 72 in den Ringbereich 74 hineinerstreckt, so dass in dieser Tasche 132 der Magnetfeldsensor 130 eingesetzt werden kann, welcher sich mit einer magnetfeldsensitiven Richtung 134 parallel zu einem Boden 136 der Tasche 132 erstreckt, wobei der Boden 136 ungefähr parallel zu einer Innenfläche 76 der Ausnehmung verläuft.

Die Tasche 132 ist ferner so ausgebildet, dass der Magnetfeldsensor 130 zu quer zu der magnetfeldsensitiven Richtung 134 verlaufenden Seitenwänden 138a der Tasche eine möglichst geringe Distanz, das heißt auch einen möglichst geringen Luftspalt aufweist.

Vorzugsweise ist ein vorhandener Luftspalt zwischen den Seitenwänden 138a und 138b und den entsprechenden Wänden 140a, 140b des Magnetfeldsensors durch ein ferromagnetisches Material 142 möglichst weitgehend reduziert. Beispielsweise ist es denkbar, das ferromagnetische Material 142 als Füllmaterial in einer Vergussmasse 144 vorzusehen, mit welchem der Magnetfeldsensor 130 in der Tasche 132 fixiert ist.

Der Magnetfeldsensor 130 ist hierzu beispielsweise als sogenannter Giant Magneto Resistence (GMR) Sensor ausgebildet, wobei dessen Gehäuse zwei zueinander parallele Flachseiten größter Ausdehnung aufweist, die parallel zu der Richtung 134 verlaufen.

Damit ist dieser Magnetfeldsensor 130 in der Lage, nahe der Innenfläche 78 der Aufnahme 72 die Magnetfelddurchflutung des Ringbereichs 74 zu messen.

Bei einem derart ausgebildeten Magnetfeldsensor 130 besteht außerdem in einfacher Weise die Möglichkeit, Zuleitungen zu dem Magnetfeldsensor 130 über ein Zuleitungskabel 150 zu der elektrischen Anschlusseinheit 70 zu führen, wobei das Zuleitungskabel 170 beispielsweise von einer Steuerschaltung 152 zu der Aufnahme 72 geführt ist.

Die Steuerschaltung 152 beinhaltet eine Vielzahl von Steuerungen für die Steuerfunktionen der erfindungsgemäßen Anhängekupplung und unter anderem auch eine Anhängererkennungsschaltung 154, welche die Magnetfelddurchflutung im Bereich des Magnetfeldsensors 130 erfasst und je nach den vom Magnetfeldsensor 130 detektierten Werten der Magnetfelddurchflutung erkennt, ob das Magnetfeld 100 bei nicht auf der Kupplungskugel 46 aufsitzendem Kupplungsaufsatz 110 vorliegt oder das Magnetfeld 120 bei auf der Kupplungskugel 46 aufsitzendem Kupplungsaufsatz 110.

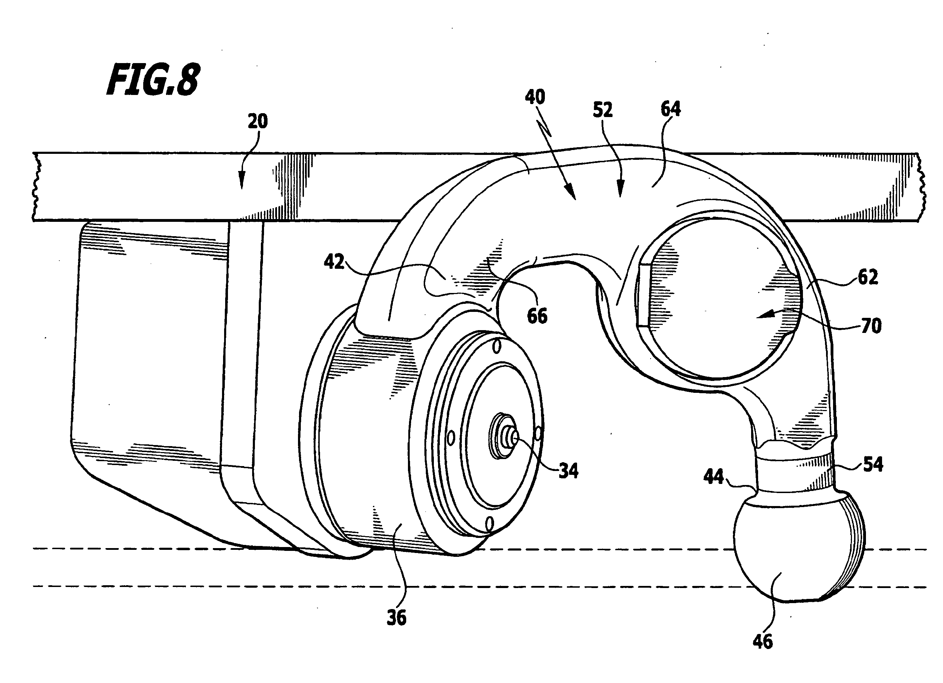

Damit ist die Anhängererkennungsschaltung 154 in der Lage, ein Signal auszugeben, das das Angreifen oder Nichtangreifen des Kupplungsaufsatzes 110 an der Kupplungskugel 46 anzeigt, wobei dieses Signal entweder zu einer optischen Anzeige 155 im Bereich einer Betätigung für die schwenkbare Anhängekupplung im Kofferraumbereich und/oder zu einer optischen Anzeige am Armaturenbrett führt und/oder dieses Signal S auch von der Steuerschaltung 152 der Anhängekupplung insoweit verwertet wird, als ein Verschwenken des Kugelhalses von der in den Figuren 2, 3, 4 und 6 dargestellten Arbeitsstellung in die in Fig. 8 dargestellte Ruhestellung durch ein Blockieren eines Lösens einer Verriegelung des Kugelhalses 40 in der Arbeitsstellung und/oder ein Blockieren des Verschwenkens durch einen Schwenkantrieb 156 verhindert wird.

Ergänzend hierzu kann das von der Anhängererkennungsschaltung 154 erzeugte Signal S, welches das Angreifen oder Nichtangreifen des Kupplungsaufsatzes 110 an der Kupplungskugel 46 anzeigt, auch dazu eingesetzt werden, weitere Steuergeräte 157, 158, 159 des Kraftfahrzeugs zu bestimmten Funktionsweisen zu veranlassen.

So sieht eine Möglichkeit vor, ein Lichtsteuergerät 157 des Kraftfahrzeugs so anzusteuern, dass beim Angreifen des Kupplungsaufsatzes 110 an der Kupplungskugel 46 eine Nebelschlussleuchte des Kraftfahrzeugs ausgeschaltet wird, um Irritationen des Verkehrs zu vermeiden, da bei einem am an der Kupplungskugel 46 angreifenden Kupplungsaufsatz 110 davon ausgegangen werden kann, dass die mit dem Kupplungsaufsatz 110 an der Anhängekupplung fixierte Einheit eine eigene Beleuchtung aufweist. Ist diese Einheit beispielsweise ein Fahrradträger, so ist bereits aufgrund der gesetzlichen Vorschriften die Nebelschlussleuchte des Kraftfahrzeugs selbst zwingend auszuschalten.

Ist die mit dem Kupplungsaufsatz 110 verbundene Einheit ein Anhänger, so ist es ebenfalls vorteilhaft, zu verhindern, dass am Kraftfahrzeug selbst die Nebelschlussleuchte angeschaltet werden kann.

Es besteht aber auch noch eine weitere Möglichkeit, andere Steuergeräte hinsichtlich ihrer Funktion zu beeinflussen.

So ist es beispielsweise denkbar, eine elektronische Stabilisierungssteuerung 158 für die Bremsen und das Fahrwerk, welches die Fahreigenschaften des Kraftfahrzeugs insbesondere bei Kurvenfahrten oder sonstigen Beschleunigungszuständen stabilisiert in seiner Funktion an die Tatsache anzupassen, dass an der Anhängekupplung eine Einheit über den Kupplungsaufsatz 110 angehängt ist.

Alternativ oder ergänzend hierzu kann auch gleichzeitig ein Antiblockiersystem in seiner Funktion an die Tatsache, dass an der Anhängekupplung eine Einheit angehängt ist, beeinflusst werden.

Eine weitere Möglichkeit sieht ein Steuergerät 159 vor, das bei einem das Angreifen eines Kupplungsaufsatzes 110 anzeugenden Signal S erst die Anschlusseinheit 70 mit dem Bordnetz des Fahrzeugs verbindet und dann, wenn kein Kupplungsaufsatz 110 an der Kupplungskugel 46 angreift, die Anschlusseinheit 70 vom Bordnetz abkoppelt, um Störungen durch Feuchtigkeit in der Anschlusseinheit 70 zu vermeiden.

Ferner kann die von der Anhängererkennungsschaltung 154 mittels des Signals erzeugte Information, dass an der Kupplungskugel 46 ein Kupplungsaufsatz 110 angreift oder nicht, kombiniert werden mit der Information, dass in die Anschlusseinheit 70 ein Stecker zur elektrischen Versorgung und Steuerung einer an der Anhängekupplung angehängten Einheit eingesteckt ist.

Das Einstecken des Steckers wird dabei entweder durch einen separaten Taster erkannt oder durch die bei eingestecktem Stecker auftretende Belastung eines Stromkreises zur Versorgung der mit dem Kupplungsaufsatz 110 verbundenen Einheit.

Insbesondere ist bei dem ersten Ausführungsbeispiel vorgesehen, dass der Magnetfeldsensor 130 in einem Abschnitt 162 des Ringbereichs 74 angeordnet ist, welcher in einem Krümmungsinnenbereich 164 des U-förmigen Kugelhalses 40 liegt, da das Magnetfeld 100 die Tendenz hat, den Krümmungsinnenbereich 164 des Kugelhalses 40 stärker zu durchfluten als einen Krümmungsaußenbereich 166 und daher ist der Unterschied der Magnetfelddurchflutung des Magnetfeldsensors 130 zwischen dem Magnetfeld 100 und dem Magnetfeld 120 größer und somit das Vorhandensein eines Kupplungsaufsatzes 110 auf der Kupplungskugel 46 sicherer detektierbar.

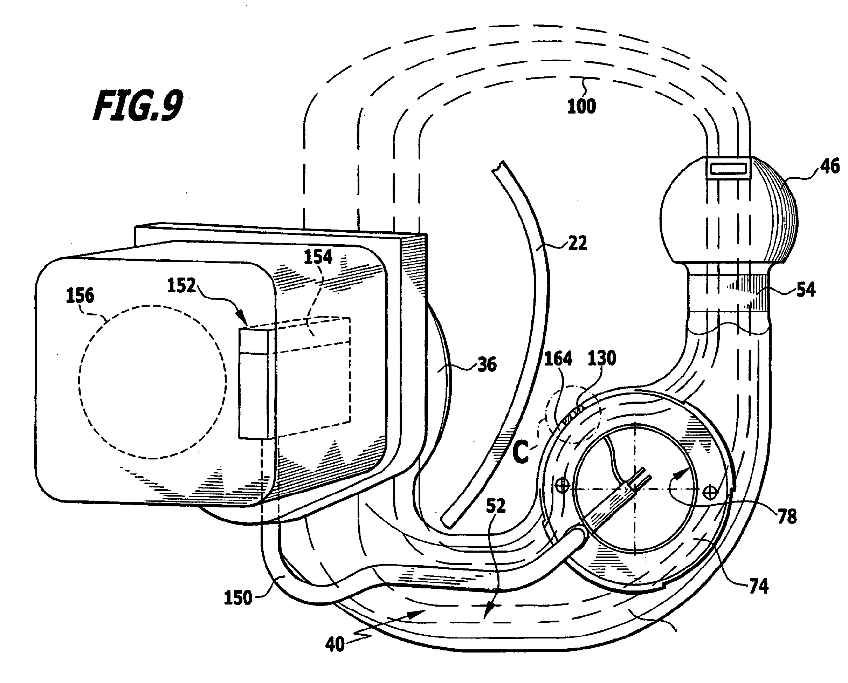

Bei einem zweiten Ausführungsbeispiel einer erfindungsgemäßen Anhängekupplung, dargestellt in Fig. 9 ist der Magnetfeldsensor 130 im Wesentlichen an der Krümmungsinnenseite 164 des Kugelhalses 40 vorgesehen, beispielsweise ebenfalls im Ringbereich 174. Dabei stellt die Tasche 132' eine Vertiefung gegenüber einer Krümmungsinnenfläche 168 des Kugelhalses 40 dar, in welcher der Magnetfeldsensor 130 ebenfalls vollständig aufgenommen werden kann.

Der Einbau des Magnetfeldsensors 130 in der Tasche 132' erfolgt dabei in gleicher Weise wie im Zusammenhang mit der Tasche 132 beschrieben, insbesondere auch hinsichtlich der Luftspalte zwischen den Seitenwänden 138'a und 138'b der Tasche 132 sowie den Seitenwänden 140a und 140b des Magnetfeldsensors.

Auch in diesem Fall ist eine einfache elektrische Verbindung zwischen dem Magnetfeldsensor 130 und der Anhängererkennungsschaltung 154 realisierbar, da ebenfalls die Möglichkeit besteht über den Kabelstrang 150, der zu der elektrischen Anschlusseinheit 70 geführt ist, auch die Leitungen für den Magnetfeldsensor 130 zu führen.

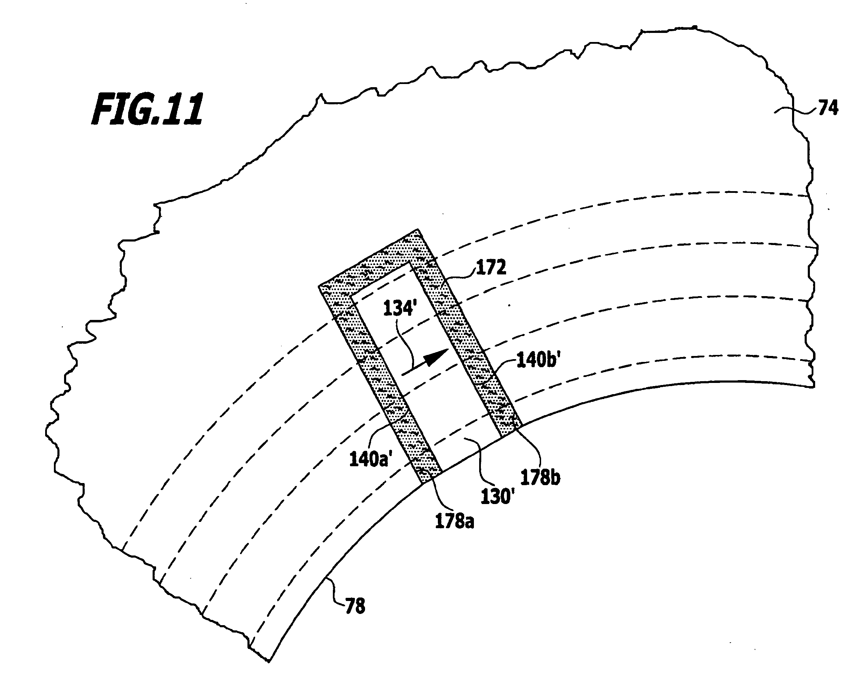

Alternativ zum als Giant Magneto Resonance Sensor (GMR-Sensor) ausgebildeten Magnetfeldsensor 130 besteht aber auch, wie in Fig. 11 dargestellt, bei einem dritten Ausführungsbeispiel die Möglichkeit, einen Hallsensor als Magnetfeldsensor 130' einzusetzen, bei welchem die magnetfeldsensitive Richtung 134 senkrecht auf den Flachseiten 140'a und 140'b steht, die in diesem Fall die größte Flächenausdehnung aufweisen.

Das heißt, dass eine Aufnahme für einen derartigen Magnetfeldsensor 130' sich tiefer in das Material des Kugelhalses 40 hineinerstreckt, so dass eine Tasche 172 vorhanden sein muss, die sich beispielsweise ausgehend von der Innenfläche 78 tiefer in das Material des Kugelhalses 40, in diesem Fall das Material des Ringbereichs 74, hineinerstrecken muss, um den Magnetfeldsensor 130' aufzunehmen, allerdings mit dem Vorteil, dass eine größere magnetfielddurchflutete Fläche des Magnetfeldsensors 130' zur Verfügung steht und insbesondere auch die Möglichkeit besteht, die tief in dem Material des Kugelhalses 40 verlaufende Magnetfelddurchflutung zu erfassen.

Die Montage des Magnetfeldsensors 130' hat dabei in gleicher Weise zu erfolgen wie bei den voranstehenden Ausführungsbeispielen, insbesondere mit möglichst optimaler magnetischer Ankopplung an das die Tasche 172 umgebende Material des Kugelhalses 40, gegebenenfalls unter Auffüllung der Luftspalte zwischen den Seitenwänden 140'a und 140'b und den diesen zugewandten Seitenwänden 178a und 178b der Tasche mit einem ferromagnetischen Material.

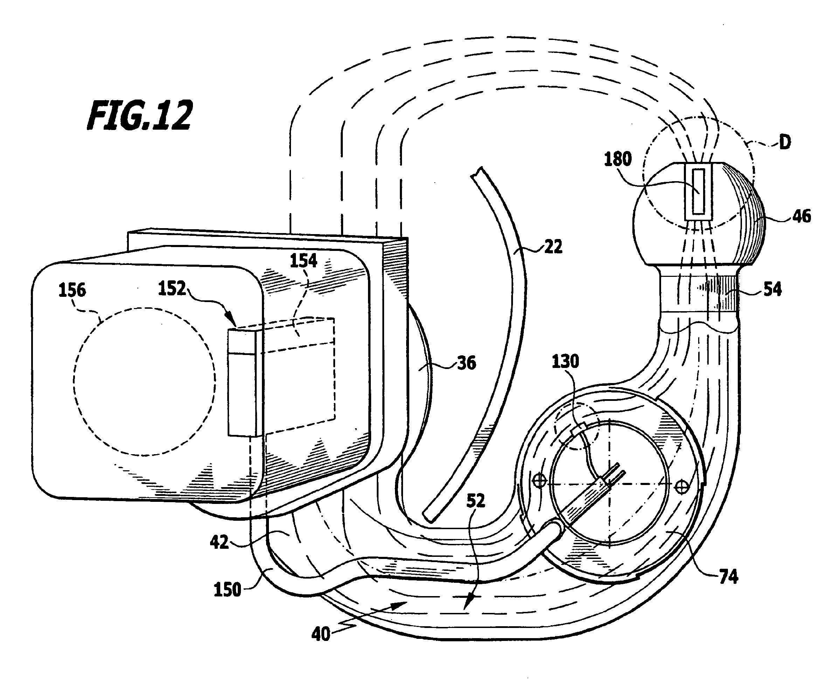

Bei einem vierten Ausführungsbeispiel einer erfindungsgemäßen Anhängekupplung, dargestellt in Fig. 12, ist der Magnet nicht als Knopfmagnet 80 ausgebildet, sondern als Stabmagnet 180, welcher in einer Ausnehmung 82' angeordnet ist, die sich ebenfalls ausgehend von der Abflachung 84 in die Kupplungskugel, und zwar vorzugsweise ebenfalls symmetrisch zur Mittelachse 56, hineinerstreckt, allerdings über eine größere Distanz als der Knopfmagnet 80, da der Abstand der Polseiten 192 und 194, die sich quer zu einer Längsachse des Stabmagneten 180 erstrecken, wesentlich größer als beim Knopfmagnet 80 ist. Der Vorteil dieser Lösung ist darin zu sehen, dass die radiale Ausdehnung der Ausnehmung 82' bezüglich der Mittelachse 56 geringer ist.

Auch bei diesem Ausführungsbeispiel ist der Stabmagnet 180 mit der Polseite 192 in einem Abstand von dem Boden 86' der Ausnehmung 82' angeordnet, so dass sich ebenfalls ein Luftspalt 96' ausbildet und in gleicher Weise liegt auch die Polseite 194 des Stabmagneten 180 im Abstand von der Öffnung 88' der Ausnehmung 82, so dass der Stabmagnet 180 vollständig geschützt in der Ausnehmung 82 angeordnet werden kann, wobei die Fixierung des Stabmagneten 180 durch eine Einbettmaske 98 erfolgt.

Dabei lässt sich die Dicke des Luftspalts 96 beispielsweise durch einen Einsatzkörper 200 vorgeben, der einerseits auf dem Boden 86' der Ausnehmung 82 aufsitzt und andererseits die Polseite 92 des Stabmagneten 180 stützt.

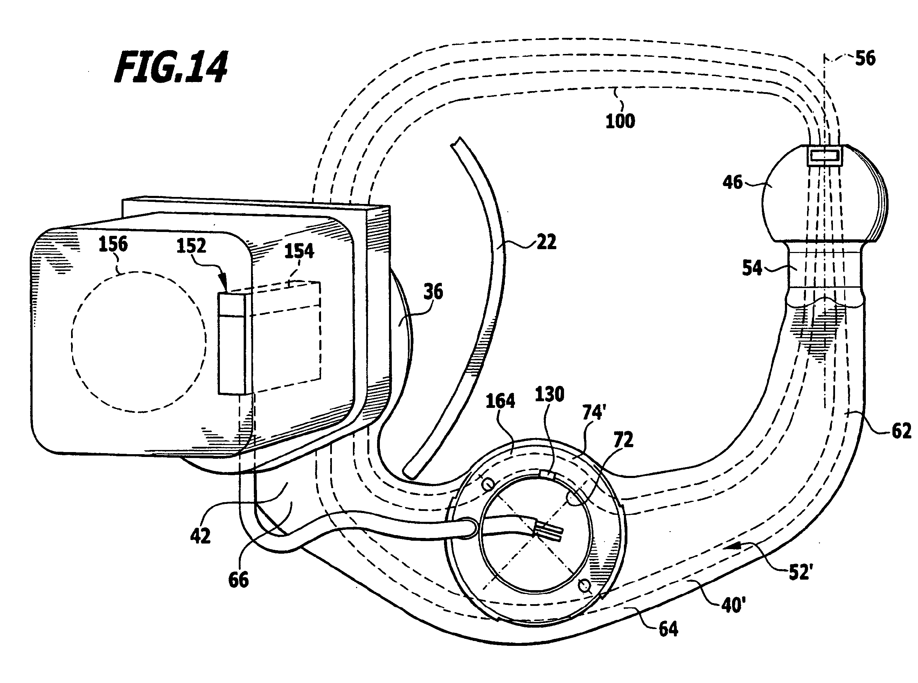

Bei einem fünften Ausführungsbeispiel einer erfindungsgemäßen Anhängekupplung, dargestellt in Fig. 14, umfasst der Zwischenabschnitt 52' ebenfalls den Bogenabschnitt 62 und den Verbindungsabschnitt 64, allerdings mit dem Unterschied, dass in dem Verbindungsabschnitt 64 der Ringkörper 74' mit der Aufnahme 72 für die elektrische Anschlusseinheit 70 vorgesehen ist.

Damit ist es bei diesem Ausführungsbeispiel günstig, beispielsweise den Magnetfeldsensor 130 in dem Ringbereich 74' anzuordnen, wobei dieser entweder in der Art, wie sie beim ersten Ausführungsbeispiel beschrieben wurde oder in der Art, wie sie beim zweiten Ausführungsbeispiel beschrieben wurde, angeordnet ein kann.

Vorzugsweise liegt der Magnetfeldsensor 130 aber auch nahe des Krümmungsinnenbereichs des Kugelhalses 40', um eine möglichst hohe Magnetfelddurchflutung desselben zu erreichen.

Es besteht aber auch die Möglichkeit, als Magnetfeldsensor den Magnetfeldsensor 130' gemäß dem dritten Ausführungsbeispiel vorzusehen.

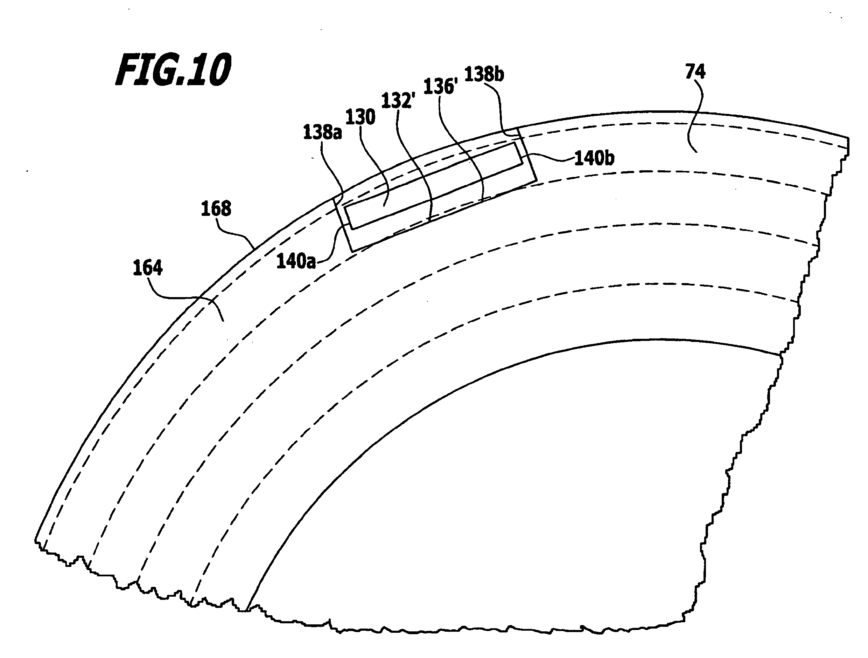

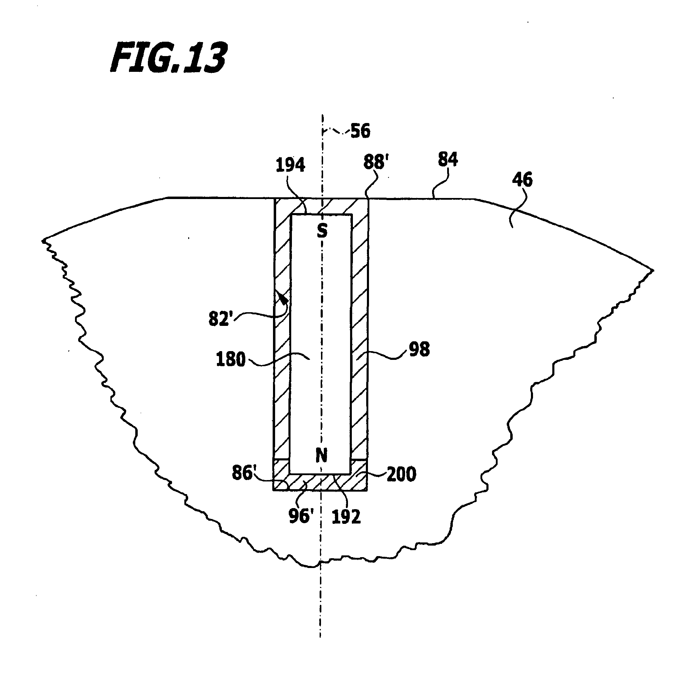

Im Übrigen wird hinsichtlich der Ausführung der Merkmale und der Funktion der weiteren Ausführungsbeispiele gemäß Fig. 9 bis 14 vollinhaltlich auf die Ausführungen zum ersten Ausführungsbeispiel Bezug genommen.

## Patentansprüche

1. Anhängekupplung für Kraftfahrzeuge umfassend einen Kugelhals (40), eine an einem ersten Ende (42) des Kugelhalses (40) angreifende, am Kraftfahrzeug (12) fixierte Halteeinheit (30) für den Kugelhals (40), sowie eine an einem zweiten Ende (44) des Kugelhalses (40) angeordnete Kupplungskugel (46),
**dadurch gekennzeichnet, dass** in der Kupplungskugel (46) ein Magnet (80, 180) angeordnet ist, dass der Magnet (80, 180) so ausgerichtet ist, dass eine Magnetfelddurchflutung des Kugelhalses (40) erfolgt, dass der Kugelhals (46) einen sich von dem zweiten Ende (44) ausgehend erstreckenden Kugelhalsendabschnitt (54) aufweist, der ein sich unmittelbar an die Kupplungskugel anschließender zylindrisch geformter Abschnitt des Kugelhalses (40) ist, dass an dem Kugelhals (40) außerhalb des Kugelhalsendabschnitts ein Magnetfeldsensor (130) zur Erfassung von dessen Magnetfelddurchflutung angeordnet ist und dass der Magnetfeldsensor (130) mit einer Auswerteschaltung (154) verbunden ist, die die Magnetfelddurchflutung des Kugelhalses (40) erfasst.

2. Anhängekupplung nach Anspruch 1, **dadurch gekennzeichnet, dass** der Magnet (80, 180) in der Kupplungskugel (46) derart angeordnet ist, dass ein an der Kupplungskugel (46) angreifender Kupplungsaufsatz (110) die Magnetfelddurchflutung des Kugelhalses (40) bezogen auf eine Magnetfelddurchflutung des Kugelhalses (40) bei von dem Kupplungsaufsatz (110) freier Kupplungskugel (46), reduziert.

3. Anhängekupplung nach Anspruch 1, **dadurch gekennzeichnet, dass** der Magnet (80, 180) in einem dem zweiten Ende (44) des Kugelhalses (40) abgewandten Bereich der Kupplungskugel (46) angeordnet ist.

4. Anhängekupplung nach einem der voranstehenden Ansprüche, **dadurch gekennzeichnet, dass** der Magnet (80, 180) in einer Ausnehmung (82) der Kupplungskugel (46) angeordnet ist.

5. Anhängekupplung nach Anspruch 4, **dadurch gekennzeichnet, dass** der Magnet (80, 180) mit seiner Nord-Süd-Ausrichtung parallel oder in einem spitzen Winkel zu einer Symmetrieachse (56) der Kupplungskugel (46) ausgerichtet ist.

6. Anhängekupplung nach einem der voranstehenden Ansprüche, **dadurch gekennzeichnet, dass** der Magnet (80, 180) im Bereich einer seiner Polseiten (82, 94) mit einem Luftspalt (96) zum Material der Kupplungskugel (46) angeordnet ist.

7. Anhängekupplung nach einem der voranstehenden Ansprüche, **dadurch gekennzeichnet, dass** der Kugelhals (40) ausgehend von der Kupplungskugel (46) in einer Krümmungsebene gekrümmt verläuft und dass der Magnetfeldsensor (130) in einem Krümmungsinnenbereich (164) des Kugelhalses (40) angeordnet ist.

8. Anhängekupplung nach einem der voranstehenden Ansprüche, **dadurch gekennzeichnet, dass** der Magnetfeldsensor (130) in einem Abschnitt (52) des Kugelhalses (46) angeordnet ist, welcher in Richtung des Verlaufs des Kugelhalses (46) mindestens einen Abstand von dem zweiten Ende (44) aufweist, der größer ist als ein Durchmesser der Kupplungskugel (46).

9. Anhängekupplung nach einem der voranstehenden Ansprüche, **dadurch gekennzeichnet, dass** der Kugelhals (40) einen zwischen dem Kugelhalsendabschnitt (54) und der Halteeinheit (30) verlaufenden Zwischenabschnitt (56) aufweist und dass der Magnetfeldsensor (130) in dem Zwischenabschnitt (52) angeordnet ist.

10. Anhängekupplung nach Anspruch 9, **dadurch gekennzeichnet, dass** der Zwischenabschnitt (52) einen sich an den Kugelhalsendabschnitt anschließenden gekrümmten Bogenabschriitt (62) aufweist und dass der Magnetfeldsensor (130) in dem Bogenabschnitt (62) angeordnet ist.

11. Anhängekupplung nach Anspruch 9 oder 10, **dadurch gekennzeichnet, dass** der Zwischenabschnitt (52) einen quer zur Mittelachse (56) der Kupplungskugel (46) verlaufenden Verbindungsabschnitt (64) aufweist und dass der Sensor (130) an dem Verbindungsabschnitt (64) angeordnet ist.

12. Anhängekupplung nach einem der voranstehenden Ansprüche, **dadurch gekennzeichnet, dass** in dem Kugelhals (40) eine Aufnahme (72) für ein elektrisches Anschlusselement (70) vorgesehen ist und das der Magnetfeldsensor (130) im Bereich der Aufnahme (72) angeordnet ist.

13. Anhängekupplung nach einem der voranstehenden Ansprüche, **dadurch gekennzeichnet, dass** der Magnetfeldsensor (130) in einer in den Kugelhals (40) eingearbeiteten Tasche (132) angeordnet ist.

14. Anhängekupplung nach einem der voranstehenden Ansprüche, **dadurch gekennzeichnet, dass** die Auswerteschaltung (154) ein Signal (S) erzeugt, welches das Angreifen oder Nichtangreifen eines Kupplungsaufsatzes (110) an der Kupplungskugel (46) angibt.

## Claims

1. Trailer coupling for motor vehicles comprising a ball neck (40), a holding unit (30) for the ball neck (40) fixed on the motor vehicle (12) and engaging on a first end (42) of the ball neck (40) as well as a coupling ball (46) arranged at a second end (44) of the ball neck (40), **characterized in that** a magnet (80, 180) is arranged in the coupling ball (46), that the magnet (80, 180) is aligned such that the ball neck (40) is penetrated by the magnetic field, that the ball neck (46) has a ball neck end section (54) extending from the second end (44), said end section being a cylindrically shaped section of the ball neck (40) directly adjoining the coupling ball, that a magnetic field sensor (130) is arranged on the ball neck (40) outside the end section of the ball neck for the purpose of detecting its penetration by the magnetic field and that the magnetic field sensor (130) is connected to an evaluation circuit (154) recording the penetration of the ball neck (40) by the magnetic field.

2. Trailer coupling as defined in claim 1, **characterized in that** the magnet (80, 180) is arranged in the coupling ball (46) in such a manner that a coupling attachment (110) engaging on the coupling ball (46) reduces the magnetic field penetration of the ball neck (40) in relation to a magnetic field penetration of the ball neck (40) in the case of a coupling ball (46) free from the coupling attachment (110).

3. Trailer coupling as defined in claim 1, **characterized in that** the magnet (80, 180) is arranged in a region of the coupling ball (46) facing away from the second end (44) of the ball neck (40).

4. Trailer coupling as defined in any one of the preceding claims, **characterized in that** the magnet (80, 180) is arranged in a recess (82) of the coupling ball (46).

5. Trailer coupling as defined in claim 4, **characterized in that** the magnet (80, 180) is aligned with its North-South alignment parallel or at an acute angle to an axis of symmetry (56) of the coupling ball (46).

6. Trailer coupling as defined in any one of the preceding claims, **characterized in that** the magnet (80, 180) is arranged with a gap of air (96) to the material of the coupling ball (46) in the region of one of its pole sides (82, 94).

7. Trailer coupling as defined in any one of the preceding claims, **characterized in that** the ball neck (40) extends in a curved manner in a plane of curvature starting from the coupling ball (46) and that the magnetic field sensor (130) is arranged in an inner region (164) of the curvature of the ball neck (40).

8. Trailer coupling as defined in any one of the preceding claims, **characterized in that** the magnetic field sensor (130) is arranged in a section (52) of the ball neck (46) having a distance from the second end (44) at least greater than a diameter of the coupling ball (46) in the direction of the course of the ball neck (46).

9. Trailer coupling as defined in any one of the preceding claims, **characterized in that** the ball neck (40) has an intermediate section (56) extending between the end section (54) of the ball neck and the holding unit (30) and that the magnetic field sensor (130) is arranged in the intermediate section (52).

10. Trailer coupling as defined in claim 9, **characterized in that** the intermediate section (52) has a curved arc section (62) adjoining the end section of the ball neck and that the magnetic field sensor (130) is arranged in the arc section (52).

11. Trailer coupling as defined in claim 9 or 10, **characterized in that** the intermediate section (52) has a connecting section (64) extending transversely to the central axis (56) of the coupling ball (46) and that the sensor (130) is arranged at the connecting section (64).

12. Trailer coupling as defined in any one of the preceding claims, **characterized in that** a receptacle (72) for an electrical connection element (70) is provided in the ball neck (40) and that the magnetic field sensor (130) is arranged in the region of the receptacle (72).

13. Trailer coupling as defined in any one of the preceding claims, **characterized in that** the magnetic field sensor (130) is arranged in a pocket (132) worked into the ball neck (40).

14. Trailer coupling as defined in any one of the preceding claims, **characterized in that** the evaluation circuit (154) generates a signal (S) indicating the engagement or non-engagement of a coupling attachment (110) on the coupling ball (46).

## Revendications

1. Attelage pour véhicules automobiles, comprenant un col de cygne (40), une unité de maintien (30) pour le col de cygne (40) fixée sur le véhicule automobile (12) et en prise sur une première extrémité (42) du col de cygne (40), ainsi qu'une boule d'attelage (46) disposée à une deuxième extrémité (44) du col de cygne (40),
**caractérisé en ce qu'**un aimant (80, 180) est disposé dans la boule d'attelage (46), **en ce que** l'aimant (80, 180) est orienté de manière à produire un flux de magnétisation par le col de cygne (40), **en ce que** le col de cygne (46) comporte un segment d'extrémité de col de cygne (54) s'étendant à partir de la deuxième extrémité (44) et qui est un segment de forme cylindrique du col de cygne (40) immédiatement adjacent à la boule d'attelage, **en ce qu'**un capteur de champ magnétique (130) pour la détection du flux de magnétisation par le col de cygne (40) est disposé sur celui-ci en dehors du segment d'extrémité du col de cygne, et **en ce que** le capteur de champ magnétique (130) est relié à un circuit d'évaluation (154) qui détecte le flux de magnétisation par le col de cygne (40).

2. Attelage selon la revendication 1, **caractérisé en ce que** l'aimant (80, 180) est disposé dans la boule d'attelage (46) de telle manière qu'un embout d'accouplement (110) en prise sur la boule d'attelage (46) réduise le flux de magnétisation par le col de cygne (40) par rapport à un flux de magnétisation par le col de cygne (40) quand la boule d'attelage (46) est sans embout d'accouplement (110).

3. Attelage selon la revendication 1, **caractérisé en ce que** l'aimant (80, 180) est disposé dans une partie de la boule d'attelage (46) distante de la deuxième extrémité (44) du col de cygne (40).

4. Attelage selon l'une des revendications précédentes, **caractérisé en ce que** l'aimant (80, 180) est disposé dans une cavité (82) de la boule d'attelage (46).

5. Attelage selon la revendication 4, **caractérisé en ce que** l'aimant (80, 180) est par son orientation Nord-Sud parallèle à un axe de symétrie (56) de la boule d'attelage (46) ou forme un angle aigu avec celui-ci.

6. Attelage selon l'une des revendications précédentes, **caractérisé en ce qu'**au niveau d'un de ses côtés polaires (82, 94), l'aimant (80, 180) est disposé avec un entrefer (96) par rapport au matériau de la boule d'attelage (46).

7. Attelage selon l'une des revendications précédentes, **caractérisé en ce que** le col de cygne (40) s'étend sur un plan de courbure à partir de la boule d'attelage (46), et **en ce que** le capteur de champ magnétique (130) est disposé dans une zone de courbure intérieure (164) du col de cygne (40).

8. Attelage selon l'une des revendications précédentes, **caractérisé en ce que** le capteur de champ magnétique (130) est disposé dans une partie (52) du col de cygne (46) qui, dans le sens d'extension du col de cygne (46), présente au moins un espacement à la deuxième extrémité (44) qui est supérieur à un diamètre de la boule d'attelage (46).

9. Attelage selon l'une des revendications précédentes, **caractérisé en ce que** le col de cygne (40) comporte une partie intermédiaire (52) s'étendant entre le segment d'extrémité de col de cygne (54) et l'unité de maintien (30), et **en ce que** le capteur de champ magnétique (130) est disposé dans la partie intermédiaire (52).

10. Attelage selon la revendication 9, **caractérisé en ce que** la partie intermédiaire (52) présente un segment d'arc incurvé (62) adjacent au segment d'extrémité de col de cygne, et **en ce que** le capteur de champ magnétique (130) est disposé dans le segment d'arc (62).

11. Attelage selon la revendication 9 ou 10, **caractérisé en ce que** la partie intermédiaire (52) présente un segment de liaison (64) s'étendant transversalement à l'axe central (56) de la boule d'attelage (46), et **en ce que** le capteur (130) est disposé sur le segment de liaison (64).

12. Attelage selon l'une des revendications précédentes, **caractérisé en ce qu'**un logement (72) pour un élément de connexion électrique (70) est prévu dans le col de cygne (40), et **en ce que** le capteur de champ magnétique (130) est disposé au niveau du logement (72).

13. Attelage selon l'une des revendications précédentes, **caractérisé en ce que** le capteur de champ magnétique (130) est disposé dans une poche (132) ménagée dans le col de cygne (40).

14. Attelage selon l'une des revendications précédentes, **caractérisé en ce que** le circuit d'évaluation (154) génère un signal (S) qui indique la prise ou l'absence d'un embout d'accouplement (110) sur la boule d'attelage (46).
